# EUROPÄISCHE PATENTSCHRIFT

(11) **EP 1 979 761 B1**
(45) Veröffentlichungstag und Bekanntmachung des Hinweises auf die Patenterteilung: **13.07.2011**
(21) Anmeldenummer: 07722779.1
(22) Anmeldetag: 30.01.2007
(51) Int. Cl.: G01S 13/00

(54) **VERFAHREN ZUM ERKENNEN EINER BEDROHUNG**
METHOD FOR SENSING A THREAT
PROCEDE DE DETECTION D'UN MENACE

(30) Priorität: 02.02.2006 DE 102006005192
(43) Veröffentlichungstag der Anmeldung: 15.10.2008
(73) Patentinhaber: Diehl Stiftung & Co. KG, 90478 Nürnberg (DE)
(72) Erfinder: WESTPHAL, Robert, 88239 Wangen (DE)
(74) Vertreter: Diehl Patentabteilung
(86) Internationale Anmeldenummer: PCT/EP2007/000777
(87) Internationale Veröffentlichungsnummer: WO 2007/088021

(56) Entgegenhaltungen:
- US-A- 5 424 744
- US-A- 5 757 310
- US-A- 5 793 329
- US-A1- 2005 275 582
- YONG WU ET AL: "Wide-angle ISAR passive imaging using smoothed pseudo wigner-ville distribution" PROCEEDINGS OF THE 2001 IEEE RADAR CONFERENCE. ATLANTA, GA, MAY 1 - 3, 2001, IEEE RADAR CONFERENCE, NEW YORK, NY : IEEE, US, 1. Mai 2001 (2001-05-01), Seiten 363-368, XP010542484 ISBN: 0-7803-6707-3
- PALMER J ET AL: "Passive detection of aircraft utilising shadowing techniques" RADAR CONFERENCE, 2003. PROCEEDINGS OF THE INTERNATIONAL ADELAIDE, SA, AUSTRALIA 3-5 SEPT. 2003, PISCATAWAY, NJ, USA,IEEE, US, 3. September 2003 (2003-09-03), Seiten 423-428, XP010688743 ISBN: 0-7803-7870-9

## Beschreibung

Die Erfindung betrifft ein Verfahren gemäß dem Hauptanspruch. Ein Verfahren gemäß dem Oberbegriff des Hauptanspruches ist aus der US 5,424,744 bekannt.

Jenes Verfahren zeichnet sich dadurch aus, dass es, ohne einer räumlichen Einweisung zu bedürfen, von einem potentiell gefährdeten, auch mobilen Objekt aus den hemisphärischen Luftraum schnell auf Eindringen eines Gegenstandes überwachen lässt, von dem eine Gefährdung ausgehen könnte. Realisiert wird das nach dem Prinzip des Passiv-Radars unter Nutzung der von den verfügbaren nichtgeostationären Navigationssatelliten-Sendem abgestrahlten, hoch zeitkonstanten kohärenten Signalstrukturen, die ebenso wie die Bahndaten der Satelliten bekannt sind. Deren aktuellen Empfangssignale werden im Vergleich zu den zu erwartenden Empfangssignalen hinsichtlich Irregularitäten wie insbesondere rückstreuabhängigen Sekundärsignalen ausgewertet, wie sie vom Einfliegen eines Gegenstandes in die Übertragungsstrecken von den Satelliten-Sendern zum Empfänger des Objektes hervorgerufen werden. Die Analyse des potentiell gefährlichen Gegenstandes wird gefördert, wenn die an Bord mehrerer zu schützender Objekte ermittelten Informationen untereinander ausgetauscht und deren Empfänger dadurch miteinander vernetzt werden. Die Empfänger können auch dafür ausgelegt sein, Satelliten-Signale aus verschiedenen Satellitensystemen parallel zu verarbeiten, was die Störfestigkeit des Systems steigert. Zusätzlich können Multisensorplattformen, insbesondere Oberflächenschiffe, oder Feuerleitradar-Stellungen mit Satellitenempfägern ausgestattet und in das Überwachungssystem eingebunden werden. So lässt sich ein Raumabwehr-Netz über größere Regionen und selbst über ganze Staatsterritorien aufspannen. Die radarähnlichen Eigenschaften der Satellitenfrequenzen, hinsichtlich ihrer weitgehend geradlinigen Ausbreitung, und deren korrelationsfördernden Modulationen (Spreizspektrum und Rauschperioden) unterstützen deren Eignung zur Überwachung des Luftraumes nach dem Prinzip des multistatischen Radars mit passivem Sekundärstrahler. Hinsichtlich weiterer Einzelheiten wird auf jene Vorveröffentlichung verwiesen.

Das gattungsgemäße Verfahren ist wegen der schon verfügbaren Navigationssatelliten-Systeme ohne senderseitige Investitionserfordernisse weltweit einsetzbar. Es arbeitet passiv und deshalb ohne Eigengefährdung, indem bei einem potentiell bedrohten stationären oder mobilen Objekt, wie einem Kraftwerk oder an Bord eines relativ niedrig und langsam fliegenden Versorgungsflugzeuges bzw. in einem Fahrzeugkonvoi zu Lande oder zu Wasser, aus den dort aktuell ermittelten Irregularitäten gegenüber den jeweils zu erwarteten Empfangssignalen die Bedrohungsanalyse durchgeführt wird.

Allerdings ist der apparative Zusatzaufwand für eine rasche und aussagekräftige Analyse erheblich; und nach erstem Auffassen eines verdächtigen Gegenstandes gestaltet sich dessen fortlaufende Beobachtung recht zeitaufwändig, um Informationen über vor allem Geschwindigkeit (aufgrund von Frequenzmessungen), Entfernung (aufgrund von Laufzeitmessungen) und Position (relativ zum Standort desjenigen Satelliten, dessen Sender gerade empfangen wird) zu gewinnen, die für eine Entscheidung und dann für das Einleiten einer eventuell notwendig werdenden Abwehrreaktion gegen den bedrohlichen Gegenstand benötigt werden. Das kann die für eine Schutzreaktion verbleibende Zeitspanne kritisch einschränken.

In Erkenntnis dieser Gegebenheiten liegt vorliegender Erfindung die technische Problemstellung zugrunde, das eingangs erörterte, an sich bewährte Verfahren ohne das Erfordernis, neue Technologien entwickeln oder auch nur einführen zu müssen, also mit ohne weiteres verfügbaren technologischen Mitteln in seiner Effizienz hinsichtlich der Aussagemöglichkeiten über aktuell anstehende Bedrohungsszenarien spürbar zu erweitern, um die Reaktionszeiten zu verbessern.

Diese Aufgabe ist erfindungsgemäß durch die wesentlichen im Hauptanspruch angegebenen Merkmale gelöst.

Danach wird nicht mehr nur beim potentiell bedrohten stationären oder mobilen Objekt, wie einem Kraftwerk oder an Bord eines relativ niedrig und langsam fliegenden Versorgungsflugzeuges bzw. in einem Fahrzeugkonvoi zu Lande oder zu Wasser, aus den dort aktuell ermittelten Irregularitäten gegenüber den jeweils zu erwarteten Empfangssignalen die Bedrohungsanalyse durchgeführt; sondern dafür wird nun auch eine Vielzahl von großräumig verteilt mobil und insbesondere auch stationär betriebenen Empfangsstationen abseits potentiell bedrohter Objekte eingesetzt. Jede dieser Empfangsstationen übermittelt die, vom jeweiligen Sender in den einzelnen nacheinander gerade erfassten Navigationssatelliten, empfangenen Signale oder daraus schon abgeleitete Irregularitäten zu Vergleichsanalysen gegebenenfalls an wenigstens einige der anderen Empfangsstationen, aber nun vor allem auch an wenigstens eine Auswertezentrale.

Diese Übermittlung erfolgt vorzugsweise über das Internet, weil ein Zugang in dieses weltweit funktionierende System an praktisch allen Orten sinnvoll stationär oder mobil betreibbarer Empfangsstationen problemlos gegeben ist; und weil darüber die ebenfalls stationär oder mobil betriebenen Auswerterechner zur Analyse der empfangsseitig auftretenden Irregularitäten unmittelbar, also ohne Anpassungserfordernisse praktisch zeitsynchron miteinander kommunizieren können.

Bei den zahlreichen einzelnen Empfangsstationen und vor allem in den wenigen gesondert betriebenen Auswertezentralen erfolgt eine vergleichende Gegenüberstellung der festgestellten Irregularitäten. Markante Merkmalsextraktionen werden bestimmten, etwa in einer Wissensdatenbank gepflegten, Rückstreuverhalten typischer Bedrohungs-Gegenstände sowie deren Bedrohungsszenarien zugeordnet, und die zeitlichen Änderungen solcher Vergleichsinformationen lassen das Bewegungsverhalten des gerade interessierenden Gegenstandes erkennen. Aufgrund solcher Resultate können dann etwa erforderliche Vorsorgemaßnahmen wie Notabschaltung und Evakuierung des Kraftwerkes und seiner Umgebung oder Klarmachen von Schutz- und Abwehreinrichtungen bzw. Ausweichbewegungsmanöver von Fahrzeugen veranlasst werden.

Wenn nämlich beispielsweise bei einer mobil oder stationär betriebenen Empfangsstation aktuell der Ausfall des erwarteten Empfangssignales von einem bestimmten Sender einer Sendergruppe, nämlich eines Satellitensystemes, festgestellt wird, dann ist aus dieser momentanen Irregularität allein noch nicht unbedingt ein sicherer Rückschluss auf die Tatsache einer Bedrohung oder gar deren Eigenart möglich. Wenn aber gleichzeitig bei einer ganz anderweitig positionierten Empfangsstation von eben diesem Sender ein - wenn auch vielleicht irreguläres - Signal empfangen werden kann, dann beruht der erwähnte Signalausfall höchst wahrscheinlich nicht auf Absorption, sondern auf Totalreflexion auf dem Wege der Funkverbindung vom Sender zur Empfangsstation. Wenn deshalb abgefragt wird, in welcher Empfangsposition momentan bezüglich gerade dieses Senders ein signifikant erhöhter Empfangspegel auftritt, was höchst wahrscheinlich auf Empfang gerade des Spiegelstrahles etwa von einer Stealth-Konfiguration beruht, kann daraus schon in gewisser Hinsicht auf die Struktur und / oder auf die räumliche Ausdehnung des fraglichen Gegenstandes geschlossen werden, um eine Warnung auszugeben oder erforderlichenfalls eine zeitnahe Abwehrreaktion vorzubereiten, zumal wenn auch anderweitig auftretende Irregularitäten diesen Schluss stützen.

Denn eine derartige Entscheidung ist desto fundierter zu treffen, je genauer sich ein Bild über die potentielle Bedrohung aus den unterschiedlichen momentanen Irregularitäten gewinnen lässt, die an ganz verschiedenen Orten zeitgleich aber praktisch nicht untereinander korreliert erfasst werden.

Für die Auswertung ist es insbesondere nützlich, die bei flacher Einstrahlung auftretenden Irregularitäten zeitsynchron mit denen von steilem Einfall zu vergleichen. Für letztere wird in der nördlichen Hemisphäre zweckmäßigerweise auf die im Aufbau befindliche GALILEO-Sendergruppe zurückgegriffen, weil mit deren Satelliten system schwerpunktmäßig die Lücke abgedeckt wird, die das äquatornäher operierende GPS-Satellitensystem hinterlässt. Die Einbeziehung des GPS-Satellitensystemes in die Auswertung ist andererseits gerade deshalb vorteilhaft, weil davon auf beispielsweise der nördlichen Erdhalbkugel große Flächen flach überstrichen werden. Ergänzend kann auf die noch verfügbaren Sender des GLONASS-Satellitensystemes zurückgegriffen werden, dessen weiterer Ausbau angekündigt wurde.

Darüber hinaus ist es hilfreich, bezüglich des, die aktuelle potentielle Bedrohung darstellenden, Gegenstandes die momentan hervorgerufenen Irregularitäten unter möglichst vielen räumlichen Aspekten, also an sehr weit auseinander liegenden Orten gleichzeitig zu erfassen und zu analysieren. Hierfür kann schon eine Gesamtschau von Beobachtungen seitens an jenen Orten stationär betriebener Empfangsstationen genügen, die über einige wenige Staaten verschiedener Erdteile verstreut positioniert sind und dort möglicherweise originär für ganz andere Aufgaben betrieben werden.

Weil diese sphärische Standortverteilung dann auch eine genauere Positionsbestimmung des aktuell interessierenden Gegenstandes ermöglicht, können Empfangsstationen mit besserer Antennenausstattung als eine marktgängige Satellitennavigationsempfangseinrichtung, insbesondere Einrichtungen mit hoch bündelnden Richtantennen, präzise auf die Raumkoordinate oder wenigstens den Raumsektor mit dem interessierenden da möglicherweise bedrohlichen Gegenstand eingewiesen werden. Mindestens eine solcher Einrichtungen sollte dafür ausgelegt sein, zum Gewinnen weiterer Erkenntnisse über die Struktur und die Kinematik des kritischen Gegenstandes, etwa eines im Anflug auf das gefährdete Objekt befindlichen Projektiles, wenigstens vorübergehend als Aktivradar betrieben zu werden.

Solch eine Radarstation sollte weit ab von der Position des potentiell bedrohten Objektes und seiner engeren Umgebung gelegen sein, so dass der vorübergehende Radarbetrieb, also die dann nicht gegebene Eigenverratssicherheit, keinerlei Gefährdung des aktuell möglicherweise bedrohten Objektes zur Folge hat. Hierfür kann auch eine aufwändigere Radaranlage eingesetzt werden, wie sie nach der US 5,757,310 in ein Frühwarnsystem gegen anfliegende taktische ballistische Raketen eingebunden ist. Diese Radaranlage wird außerhalb des gefährdeten Gebietes in Richtung auf die anfliegende Rakete versetzt betrieben, mit in Raketenanflugrichtung orientierter synthetischer Strahlcharakteristik. Das stellt zwar höhere Anforderungen an den Azimut- und Elevationsscan, das führt aber zu Zeitersparnis durch ein entfernungsabhängiges Abscannen eines voraufgeklärten Volumenbereichs.

Die eigentlichen Satelliten-Empfangsstationen dagegen können, da sie nicht selbst eine Situationsanalyse aus dem Vergleich von Irregularitäten und deren zeitlichen Veränderungen vornehmen müssen, sondern nur die Empfangssituationen an eine der Auswertezentralen weitermelden, außerordentlich preiswert betrieben werden, nämlich praktisch in der Ausstattung kommerziell erhältlicher Satellitennavigationsempfänger mit ihrer Antenneneinrichtung für einfache Rundumcharakteristik. Sie wirken dann gewissermaßen als Wecksensoren, wenn in deren etwa an eine Auswertezentrale mehr oder weniger unbearbeitet übermittelten Empfangssignalen Irregularitäten bezüglich des aktuell vom empfangenen Sender zu erwartenden Empfangssignales festgestellt werden. Daraufhin können bedarfsweise für die Bedrohungsanalyse noch vertiefende Beobachtungen aufgrund von Empfangssignalen weiterer Empfangsstationen freigeschaltet bzw. berücksichtigt werden.

Wenn von den Empfangsstationen wenigstens einige mit voneinander abweichenden Antennenstrukturen arbeiten, sind aus etwa gleichen Sachverhalten durchaus auch nicht übereinstimmende Irregularitäten für die Signaturbewertungen zu gewinnen. Dadurch kann die Aussagekraft der Bedrohungsanalyse noch erhöht werden, da die erfassten Einzeleinflüsse dann je nach den apparativen Empfangsgegebenheiten unterschiedlich zu gewichten sind.

Die zu beurteilenden Irregularitäten werden vorzugsweise durch monostatische und durch multistatische Auswertungen wenigstens nach Laufzeit, Amplitude, Dopplerverschiebung und Polarisationsverschiebung im vom kritischen Gegenstand gerade beeinflussten Empfangssignal gewonnen, nämlich in Relation zu dem für den jeweils gerade empfangenen Satellitensender bekannten und abgespeicherten oder bedarfsweise lokal synthetisch generierten Sendesignal.

Für höhere Auswertestufen kommen nach einer zusätzlichen Weiterbildung der Erfindung in den Zentralen auch die in der Radartechnik bewährten bildgebenden Verfahren wie etwa nach dem ISAR-Prinzip (Inverse Synthetic Aperture Radar) zur Anwendung, um aus der Gesamtheit der einzelnen Erkenntnisse zu einer möglichst rasch konvergierenden Bedrohungsbeurteilung zu gelangen. Diesbezüglich wird in der Arbeit "Wide-angle ISAR passive imaging using smoothed pseudo wigner-ville distribution" von Yong Wu et al. in PROCEEDINGS OF THE 2001 IEEE RADAR CONFERENCE, ATLANTA, GA, MAY 1 - 3, 2001, ..., Seiten 363-368, über eine Zielklassifikation berichtet, die mit der relativ niedrigen Trägerfrequenz kommerzieller Rundfunk- und Fernsehsender und entsprechend breiteren Empfangscharakteristiken arbeitet; weshalb die im X-Band angewandte direkte Fourier-Rekonstruktion hier nicht zum Einsatz kommt.

Bei der erfindungsgemäßen, sehr großflächigen Überwachung des Luftraumes werden zwangsläufig auch die Einflüsse erfasst, die etwa vom Linienflugverkehr auf den Empfang von Satellitensignalen ausgeübt werden, also von Gegenständen, von denen keine Bedrohung ausgeht. Um daraus resultierende Fehlalarme zu erkennen und möglichst zu unterbinden, ist es zweckmäßig den Luftraum in der engeren, etwa einige hundert Meilen überspannenden Umgebung eines potentiell bedrohten Objektes hinsichtlich der Kurse von darin operierenden Gegenständen in Form von Verkehrsflugzeugen zu beobachten und auszuwerten. Weil entsprechende Radaranlagen den Objekten regelmäßig nicht zur Verfügung stehen, wird hierfür zweckmäßigerweise ein gewissermaßen virtuelles Radarbild erstellt, wie es als solches aus dem Tracken der Bewegung von Verkehrsflugzeugen mittels UHF-Empfang und Dekodierung deren Transpondersignalen bekannt ist. Mittels eines einfachen UHF-Empfängers und entsprechender, ebenfalls kommerziell verfügbarer, Software lassen sich so Informationen insbesondere über Identität, Flugnummer, Flugbahn, Position, Flughöhe und Bewegungsraten gewinnen, womit individuelle Azimuth- und Elevationsdarstellungen möglich sind. Zum Einweisen auf bestimmte bzw. zum Verifizieren bestimmter Verkehrsflugzeuge, die keine das zu schützende Objekt gefährdenden Gegenstände sind, kann ergänzend auch auf die über das Internet verbreiteten Flugdaten des zivilen Luftverkehrs zurückgegriffen werden.

Zusätzliche Weiterbildungen und Alternativen zur erfindungsgemäßen Lösung ergeben sich aus den weiteren Ansprüchen und - auch hinsichtlich deren Vorteilen - aus nachstehender Beschreibung der Skizze eines bevorzugten Realisierungsbeispieles zur Erfindung. In dieser auf das Funktionswesentliche abstrahierten Skizze zeigt
- Fig.1: ein Beispiel für eine weltumspannende Verteilung von einigen wenigen Auswertezentralen,
- Fig.2: blockschaltbildartig die Ausstattung einer solchen Auswertezentrale und
- Fig.3: blockschaltbildartig das Zusammenwirken einer sehr großen Anzahl überregional verteilt betriebener Empfangsstationen mit den Auswertezentralen.

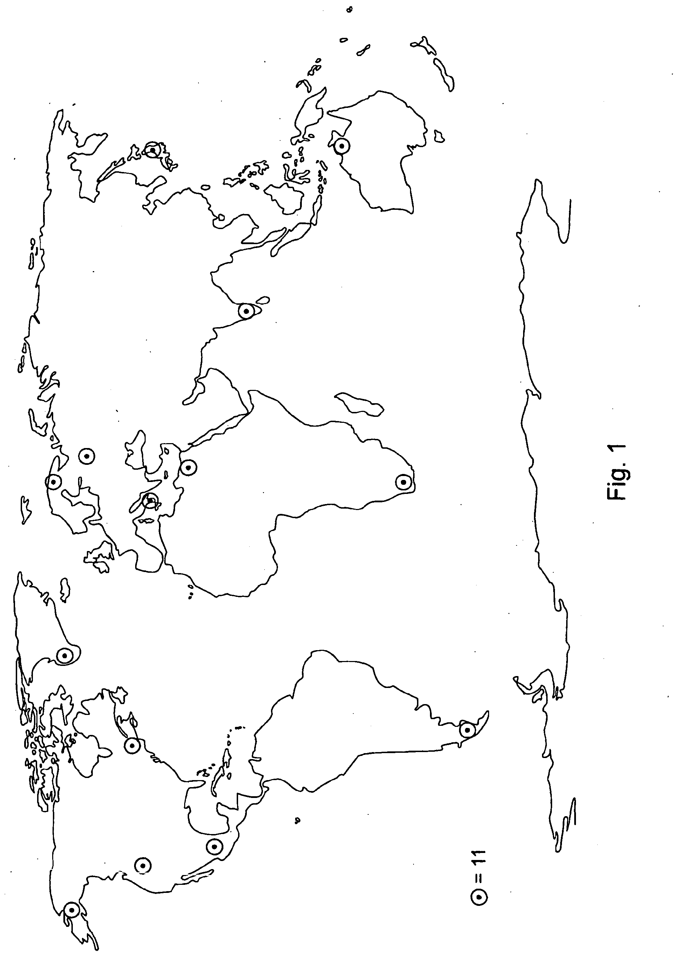

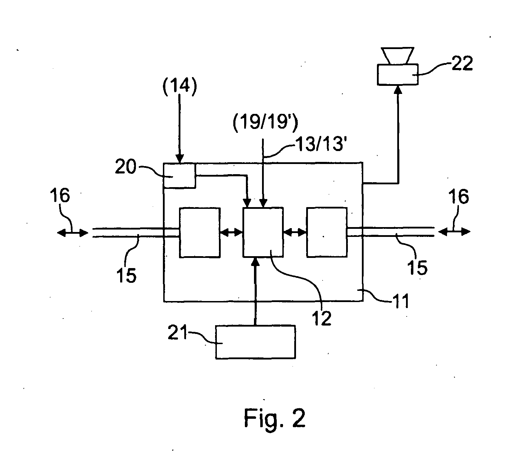

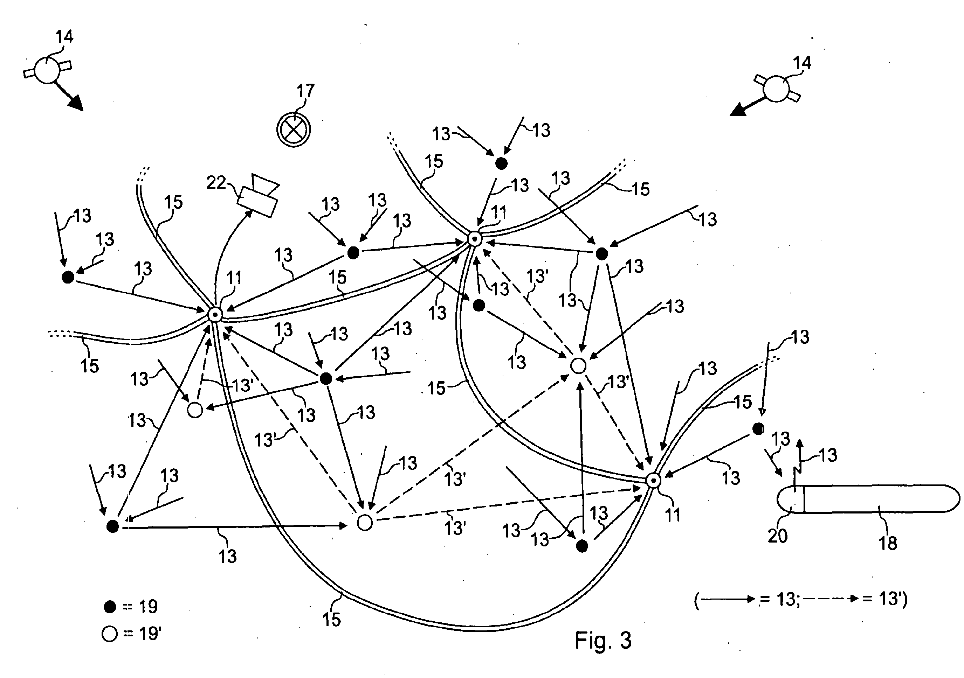

Ein praktisch weltumspannendes Netz aus relativ wenigen Auswertezentralen 11 weist im Beispielsfalle der Fig.1 etwa Standorte in Alaska, an der nordamerikanischen West- und Ostküste, in Mexiko, Feuerland, Grönland, Nordfinnland, Russland, Süditalien, Ägypten, Südafrika, Indien, Japan und Nordaustralien auf. Die Auswertezentralen 11 sind gemäß Fig.2 mit Auswerterechnern 12 für tatsächliche Empfangssignale 13 von mehreren gleichzeitig erfassten Navigationssatelliten 14 (Fig.3) bestückt, deren abgestrahlten Signale bekannt sind und zum Vergleich mit den gestörten Empfangssignalen 13 zur Verfügung stehen. Die Auswertezentralen 11 sind miteinander über das Internet 15 vernetzt, um untereinander typische Bedrohungsszenarien 16 auszutauschen. Die resultieren aus in den Empfangssignalen 13 enthaltenen Störungen, welche von potentiell gefährlichen Gegenständen 17 herrühren, bei denen es sich insbesondere um Flugkörper in Kollisionskurs zu potentiell gefährdeten Objekten 18 handeln kann.

Die Empfangssignale 13 werden an die Auswertezentralen 11, möglichst an mehrere parallel, über das Internet oder über Funkverbindungen von Empfangsstationen 19 geliefert, die, zufällig über die Regionen der Erde verteilt, beliebig kontinuierlich oder auch nur sporadisch arbeitend stationär oder an Bord von Luft-, Land- und Seefahrzeugen betrieben werden. Auch die Auswertezentralen 11 können mit Satellitenempfängern 20 ausgestattet sein, die Objekte 18 (insbesondere Luft-, Land- oder See-Fahrzeuge) sind es typischerweise ohnehin. Sie liefern - vorzugsweise auch über das Internet, aber auch z.B. über direkte Funkverbindungen - ihre momentanen Empfangssignale 13 an wenigstens die nächsterreichbare der Auswertezentralen 11, vorzugsweise an mehrere Auswertezentralen 11 parallel.

Empfangsstationen 19', die nicht für an sich andere Aufgaben im Einsatz sind sondern speziell für das vorliegende Warnsystem betrieben werden, sind zweckmäßigerweise mit einer Vorverarbeitung ausgestattet, die nicht die bloßen aktuellen Empfangssignale 13 an Auswertezentralen 11 liefern, sondern im Interesse einer beschleunigten Bedrohungsanalyse schon hinsichtlich der interessierenden Kriterien vorverarbeitete Empfangssignale 13'. Vorzugsweise sind solche speziell betrieben Empfangsstationen 19' auch mit unterschiedlichen Antennen ausgestattet, um divergierende Merkmale in den gestörten Satelliten-Empfangssignalen 13 erfassen und für die Bedrohungsanalyse auswerten zu können. In Fig.3 ist angenommen, dass diese aufwändiger als bloße Satelliten-Empfänger 20 ausgestatteten Empfangsstationen 19' im Interesse einer effektiveren solchen Vorverarbeitung auch untereinander, insbesondere wiederum über das Internet, kommunizieren, um ihre Analysen zu verifizieren.

Über eine auf der Bahnverfolgung der Transponder von Verkehrsflugzeugen beruhende Identifizierungseinrichtung 21 kann hinsichtlich des interessierenden Gegenstandes 17 eine Grobklassifikation vorgenommen und dann gegebenenfalls eine Kollisionskurswarnung an den Gegenstand 17 und/oder das Objekt 18 abgesetzt werden.

Wenn im Zuge der passiven (deshalb eigenverratssicheren) Bedrohungsanalyse die Identität des Gegenstandes 17 oder sein Kurs noch unklar bleiben sollte, aber auch wenn schon voraussichtlich genügend Indizien für eine tatsächlich gegebene Bedrohung des Objektes 18 aus den Empfangssignalen 13, 13' extrahiert werden konnten, ist unter Umständen noch eine ergänzende aktive Radaraufklärung ratsam. Damit wird von den Auswertezentralen 11 wenigstens eine Radaranlage 22 beauftragt, die weit von dem Objekt 18 entfernt liegt, um dieses nicht zu gefährden, und die außerdem nicht auf dem Kurs des Gegenstandes 17 liegt, um selbst möglichst nicht gefährdet zu sein.

Die Effektivität des eigenverratssicheren Verfahrens zur Bedrohungsanalyse nach dem Prinzip des Passivradars unter Verwendung der Sender in Navigationssatelliten 14 wird also ohne Einsatz wesentlichen technologischen Mehraufwandes noch außerordentlich gesteigert, wenn erfindungsgemäß etwa in über weite Regionen verteilt betriebenen Empfangsstationen 19 mit einfachen Navigationssatelliten-Empfängern 20, vorzugsweise ausgestattet mit unterschiedlichen Antennencharakteristiken, gewissermaßen als Wecksensoren ihre Empfangssignale 13 zur Auswertung auf etwaige momentane Irregularitäten im Vergleich zu den zu erwartenden Empfangssignalen an wenigstens eine Auswertezentrale 11 übermitteln, in der auch eine Gegenüberstellung zu anderweitig gerade festgestellten Irregularitäten stattfindet. Ergebnisabhängig können dann ohnehin verfügbare, stationär oder mobil betriebene Radaranlagen 22 mit ihren höherwertigen Antennenanlagen raumgerichtet zum Einsatz kommen, um präzisere Aussagen über den durch sein Rückstreuverhalten die Irregularitäten bewirkenden und deshalb auffallenden Gegenstand 17, etwa ein Luftfahrzeug oder ein Projektil, sowie die von ihm möglicherweise ausgehende Bedrohung einer möglichen Zielregion bzw. eines darin befindlichen mobilen oder stationären gefährdeten Objektes 18 zu gewinnen und danach über aktuell notwendige Schutz- oder Abwehmaßnahmen entscheiden zu können.

### Bezugszeichenliste

- 11: Auswertezentrale (mit 12)
- 12: Auswerterechner (in 11)
- 13: Empfangssignal (von 14)
- 14: Navigationssatellit (liefert 13)
- 15: Internet
- 16: Bedrohungsszenario (aus 13, von 11)
- 17: potentiell gefährlicher Gegenstand (auf Kollisionskurs mit 18, stört 13)
- 18: potentiell gefährdetes Objekt
- 19: Empfangsstation (mit 20)
- 20: Empfänger (für 13)
- 21: Identifizierungseinrichtung
- 22: Radaranlage

## Patentansprüche

1. Verfahren zum Sensieren der potentiellen Bedrohung eines Objektes (18) seitens eines Gegenstandes (17), der Funkverbindungen von Navigationssatelliten-Sendern (14, 14) zu voneinander beabstandeten Navigationssatelliten-Empfangsstationen (19) passiert, die deshalb gegenüber den zu erwartenden Empfangssignalen (13) irreguläre Empfangssignale (13') aufnehmen,
**dadurch gekennzeichnet,**
**dass** die Navigationssatelliten-Empfangsstationen (19, 19') mit wenigstens einer von mehreren regional weit voneinander beabstandeten Auswertezentralen (11) kommunizieren, in denen praktisch zeitsynchron die von den Empfangsstationen (19, 19') aufgenommenen Signale (13') unmittelbar oder hinsichtlich darin festgestellter Irregularitäten (13-13') und deren zeitlichen Änderungen einander gegenübergestellt sowie markante Merkmalsextraktionen bestimmten, etwa in einer Wissensdatenbank gepflegten, Rückstreuverhalten typischer Bedrohungs-Gegenstände (17) sowie deren Bedrohungsszenarien zugeordnet werden.

2. Verfahren nach dem vorangehenden Anspruch,
**dadurch gekennzeichnet,**
**dass** in den Auswertezentralen (11) die von den Empfangsstationen (19, 19') aufgenommenen Signale (13') unmittelbar oder hinsichtlich darin festgestellter Irregularitäten (13-13') den bei einer anderen Satellitensender-Gruppe (14, 14) auftretenden Irregularitäten (13-13') gegenübergestellt werden.

3. Verfahren nach einem der vorangehenden Ansprüche,
**dadurch gekennzeichnet,**
**dass** in den Auswertezentralen (11) bei Empfangsstationen (19, 19') mit unterschiedlichen Antennencharakteristiken auftretende Irregularitäten (13-13') einander gegenübergestellt werden.

4. Verfahren nach einem der vorangehenden Ansprüche,
**dadurch gekennzeichnet,**
**dass** die Erkenntnisse aus den Irregularitäten (13, 13') solchen Informationen gegenübergestellt werden, die von abseits des gefährdeten Objektes (18) auf den Gegenstand (17) der potentiellen Bedrohung ausgerichteten Aktivradar-Richtantennen von Radaranlagen (22) gewonnen werden.

5. Verfahren nach dem vorangehenden Anspruch,
**dadurch gekennzeichnet,**
**dass** die ergänzende Radaraufklärung des interessierenden Gegenstandes (17) von einer Position der Radaranlage (22) aus vorgenommen wird, die weit abgelegen von der Position des potentiell gefährdeten Objektes (18) und abseits des Kurses des potentiell gefährlichen Gegenstandes (17) liegt.

6. Verfahren nach einem der vorangehenden Ansprüche,
**dadurch gekennzeichnet,**
**dass** Irregularitäten in Empfangssignalen (13-13') von über der nördlichen Hemisphäre hochbahnigen Satelliten (14; insbesondere GALILEO) den Irregularitäten in Empfangssignalen (13-13') von dort flachbahnigen Satelliten (14; insbesondere NAVSTARGPS) gegenübergestellt werden.

7. Verfahren nach dem vorangehenden Anspruch,
**dadurch gekennzeichnet,**
**dass** die Übermittlung von den Empfangsstationen (19, 19') über das INTERNET erfolgt.

8. Verfahren nach einem der vorangehenden Ansprüche,
**dadurch gekennzeichnet,**
**dass** die gestörten Empfangssignale (13') hinsichtlich Irregularitäten (13-13') mono- und multistatisch nach Laufzeiten, Amplituden, Dopplerverschiebungen und Polarisationsverschiebungen analysiert werden.

9. Verfahren nach einem der vorangehenden Ansprüche,
**dadurch gekennzeichnet,**
**dass** auf die gestörten Empfangssignale (13') bildgebende Verfahren, wie nach dem ISAR-Prinzip, angewandt werden.

10. Verfahren nach einem der vorangehenden Ansprüche,
**dadurch gekennzeichnet,**
**dass** der interessierende Gegenstand (17) anhand einer Bahnverfolgung seiner Transpondersignale oder anhand bekannter Luftverkehrs-Flugdaten klassifiziert wird.

## Claims

1. Method for sensing the potential threat to an object (18) from an entity (17) which passes radio links from navigation satellite transmitters (14, 14) to navigation satellite receiving stations (19) which are at a distance from one another and therefore receive received signals (13') which are irregular with respect to the received signals (13) to be expected, **characterized**
**in that** the navigation satellite receiving stations (19, 19') communicate with at least one of a plurality of evaluation centres (11) which are regionally at long distances from one another and in which the signals (13') which are received by the receiving stations (19, 19') are compared with one another, virtually synchronously in time, directly or in respect of irregularities (13-13') found therein, and their rates of change, and significant feature extractions are associated with specific back-scattering behaviours, which are stored in a knowledge database, of typical threat entities (17) and their threat scenarios.

2. Method according to the preceding claim, **characterized in that**, in the evaluation centres (11), the signals (13') received by the receiving stations (19, 19') are compared directly, or with regard to irregularities (13-13') found in them, with the irregularities (13-13') which occur for a different satellite transmitter group (14, 14).

3. Method according to one of the preceding claims, **characterized in that**, in the evaluation centres (11), irregularities (13-13') which occur at receiving stations (19, 19') with different antenna characteristics are compared with one another.

4. Method according to one of the preceding claims, **characterized in that** the knowledge of the irregularities (13, 13') is compared with that information which is obtained from active radar directional antennas of radar systems (22) which are aligned beyond the threatened object (18) with the entity (17) of the potential threat.

5. Method according to the preceding claim, **characterized in that** the supplementary radar surveillance of the entity (17) of interest is carried out from a position of the radar system (22) which is well away from the position of the potentially threatened object (18) and is beyond the track of the potentially threatening entity (17).

6. Method according to one of the preceding claims, **characterized in that** irregularities in received signals (13-13') from satellites (14; in particular GALILEO) which are in high orbits above the northern hemisphere are compared with the irregularities in received signals (13-13') from satellites (14; in particular NAVSTARGPS) in low orbits there.

7. Method according to the preceding claim, **characterized in that** the INTERNET is used for transmission from the receiving stations (19, 19').

8. Method according to one of the preceding claims, **characterized in that** the disturbed received signals (13') are analyzed for irregularities (13-13') monostatically and multistatically on the basis of propagation times, amplitudes, Doppler shifts and polarization shifts.

9. Method according to one of the preceding claims, **characterized in that** imaging methods, for example based on the ISAR principle, are applied to the disturbed received signals (13').

10. Method according to one of the preceding claims, **characterized in that** the entity (17) of interest is classified by tracking the path of its transponder signals or by known air traffic flight data.

## Revendications

1. Procédé pour détecter la menace potentielle d'un objet (18) du côté d'un élément (17) qui fait passer des liaisons radioélectriques d'émetteurs de satellites de navigation (14, 14) vers des stations réceptrices de satellites de navigation (19) espacées les unes des autres, lesquelles enregistrent par conséquent des signaux reçus (13') irréguliers par rapport aux signaux reçus (13) attendus,
**caractérisé en ce**
**que** les stations réceptrices de satellites de navigation (19, 19') communiquent avec au moins une parmi plusieurs centrales d'analyse (11) très espacées régionalement les unes des autres, dans lesquelles les signaux (13') enregistrés par les stations réceptrices (19, 19') sont comparés entre eux de manière pratiquement synchrone dans le temps, directement ou du point de vue des irrégularités (13-13') constatées dans ceux-ci et de leurs variations dans le temps, et des extractions de caractéristiques remarquables sont associées à certains comportements de rétrodiffusion, par exemple maintenus dans une base de données de connaissances, d'éléments de menace types (17) ainsi qu'à leurs scénarios de menace.

2. Procédé selon la revendication précédente, **caractérisé en ce que** dans les centrales d'analyse (11), les signaux (13') enregistrés par les stations réceptrices (19, 19') sont comparés directement ou du point de vue des irrégularités (13-13') constatées dans ceux-ci avec les irrégularités (13-13') qui se produisent avec un autre groupe d'émetteurs de satellites (14, 14).

3. Procédé selon l'une des revendications précédentes, **caractérisé en ce que** les irrégularités (13-13') qui se produisent avec des stations réceptrices (19, 19') ayant des caractéristiques d'antenne différentes sont comparées entre elles dans les centrales d'analyse (11).

4. Procédé selon l'une des revendications précédentes, **caractérisé en ce que** les connaissances issues des irrégularités (13, 13') sont comparées avec des informations qui sont obtenues par des antennes directionnelles de radar actif d'installations radar (22) orientées à l'écart de l'objet (18) mis en danger sur l'élément (17) de la menace potentielle.

5. Procédé selon la revendication précédente, **caractérisé en ce que** l'interception radar complémentaire de l'élément intéressant (17) est effectuée depuis une position de l'installation radar (22) qui se trouve très isolée de la position de l'objet (18) potentiellement mis en danger et à l'écart de la course de l'élément (17) potentiellement dangereux.

6. Procédé selon l'une des revendications précédentes, **caractérisé en ce que** des irrégularités dans les signaux reçus (13-13') des satellites à haute orbite de l'hémisphère nord (14 ; notamment GALILEO) sont comparées avec les irrégularités dans les signaux reçus (13-13') des satellites à orbite quasi-circulaire (14 ; notamment NAVSTARGPS) qui s'y trouvent.

7. Procédé selon la revendication précédente, **caractérisé en ce que** la détermination des stations réceptrices (19, 19') s'effectue par le biais de l'INTERNET.

8. Procédé selon l'une des revendications précédentes, **caractérisé en ce que** les signaux reçus (13') perturbés sont soumis à une analyse en ce qui concerne les irrégularités (13-13') de manière monostatique ou multistatique du point de vue de leurs temps de propagation, amplitudes, décalages par effet Doppler et décalages de polarisation.

9. Procédé selon l'une des revendications précédentes, **caractérisé en ce que** des procédés de représentation schématique, par exemple selon le principe ISAR, sont appliqués aux signaux reçus (13') perturbés.

10. Procédé selon l'une des revendications précédentes, **caractérisé en ce que** l'élément (17) intéressant est classifié au moyen d'un suivi de la trajectoire des signaux de son transpondeur ou au moyen de données de vol connues du trafic aérien.
